# EUROPÄISCHE PATENTSCHRIFT

(11) **EP 2 024 806 B1**
(45) Veröffentlichungstag und Bekanntmachung des Hinweises auf die Patenterteilung: **04.01.2017**
(21) Anmeldenummer: 07728801.7
(22) Anmeldetag: 04.05.2007
(51) Int. Cl.: G06F 3/041, G02F 1/1333, H04M 1/02

(54) **LCD-SCHALTUNG UND VERFAHREN ZUM ANSTEUERN ZUMINDEST EINES BILDPUNKTES EINER FLÜSSIGKRISTALLANZEIGE**
LCD CIRCUIT, AND METHOD FOR TRIGGERING AT LEAST ONE PIXEL OF A LIQUID CRYSTAL DISPLAY
CIRCUIT LCD, ET PROCÉDÉ POUR DÉCLENCHER AU MOINS UN PIXEL D'UN AFFICHAGE À CRISTAUX LIQUIDES

(30) Priorität: 05.05.2006 DE 102006021099
(43) Veröffentlichungstag der Anmeldung: 18.02.2009
(73) Patentinhaber: QUALCOMM Incorporated, San Diego, CA 92121-1714 (US)
(72) Erfinder: JARCZYK, Alexander, 85356 Freising (DE)
(74) Vertreter: Samson & Partner Patentanwälte mbB
(86) Internationale Anmeldenummer: PCT/EP2007/054348
(87) Internationale Veröffentlichungsnummer: WO 2007/128792

(56) Entgegenhaltungen:
- EP-A- 0 340 096
- US-A- 6 057 903
- US-A1- 2004 105 040

## Beschreibung

LCD-Schaltung und Verfahren zum Ansteuern zumindest eines Bildpunktes einer Flüssigkristallanzeige.

Die Erfindung bezieht sich auf eine LCD-Schaltung zum Ansteuern zumindest eines Bildpunktes einer Flüssigkristallanzeige mit den oberbegrifflichen Merkmalen gemäß Patentanspruch 1 bzw. auf ein Verfahren zum Ansteuern eines Bildpunktes einer Flüssigkristallanzeige gemäß den Patentansprüchen 12 und 13.

Allgemein bekannt sind Flüssigkristallanzeigen, welche in einem transparenten Zustand Licht hindurchtreten lassen und in einem nicht-transparenten Zustand den Durchtritt von Licht blockieren. Aufgrund von Ausrichtzeiten von Molekülen der in einer solchen Flüssigkristallanzeige verwendeten Flüssigkristalle und von Ansteuereffekten mit einschwingenden und ausschwingenden Spannungskurven ist unter dem transparenten Zustand üblicherweise ein nahezu transparenter Zustand und unter dem nicht-transparenten Zustand bzw. undurchsichtigen Zustand ein nahezu undurchsichtiger Zustand zu verstehen.

Üblicherweise sind Flüssigkristallanzeigen mehrschichtig aufgebaut mit zwei Trägerschichten aus Glas oder Kunststoff, welche an den einander zugewandten Flachen jeweils eine Elektrodenschicht aufweisen. Dabei ist eine der Elektrodenschichten in eine Vielzahl einzelner Elektroden unterteilt, um den jeweiligen Flachen der Elektroden Bildpunkte zuzuordnen. Die Elektroden werden aus Indium-Zinn-Oxid (IT0 / Indium-Tin-Oxyde) ausgebildet, was ein nahezu durchsichtiges jedoch leitfähiges Material ist. Zwischen den beiden Elektrodenschichten befinden sich Abstandhalter, um die Elektrodenschichten auf Abstand zu halten. In dem Raum zwischen den Elektrodenschichten befinden sich die Flüssigkristalle, welche sich entsprechend einer zwischen den beiden Elektroden angelegten Spannung ausrichten.

Außenseitig der beiden Trägermaterialien sind Polarisatoren in Form von Folien aufgebracht. Wenn an die Elektroden keine Spannung bzw. eine Spannung insbesondere deutlich unterhalb eines Schwellenwertes angelegt wird, sind die Moleküle der Flüssigkristalle so ausgerichtet, dass Licht durch die Gesamtanordnung hindurchtreten kann. Überschreitet die an den Elektroden angelegte Spannung die Schwellenspannung, orientieren sich die Moleküle um, so dass das in die Kristallschicht einfallende Licht gedreht wird und ein Durchtritt von Licht verhindert wird.

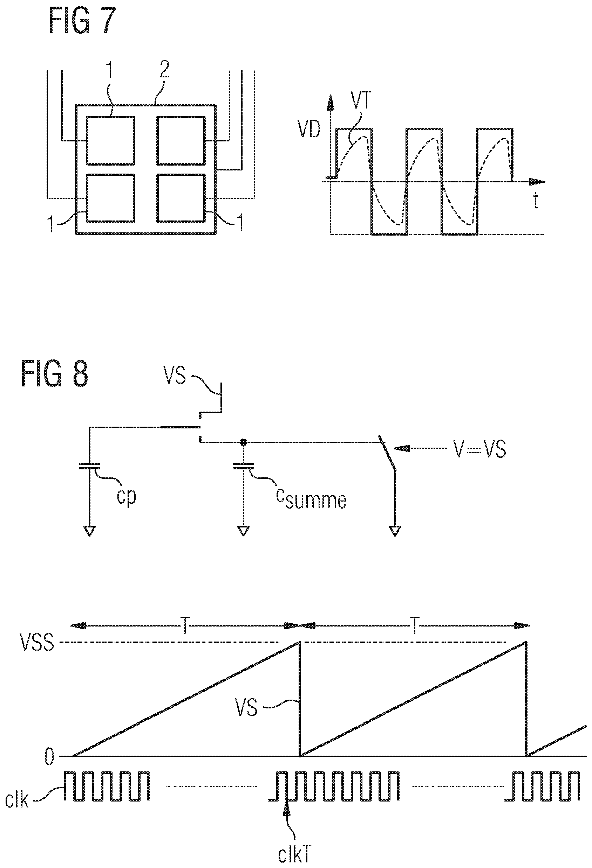

Fig. 7 zeigt eine beispielhafte Anordnung von Elektroden 1, 2 und eine Spannungs-Charakteristik zum Ansteuern der Elektroden in einer solchen Flüssigkristallanzeige. Eine erste Elektrodenschicht ist in eine Vielzahl einzelner Elektroden 1 untergliedert, welche zur Ansteuerung einzelner Bildpunkte dienen. Die zweite Elektrodenschicht ist als durchgehende Elektrode 2 ausgebildet. An die einzelnen Elektroden wird eine Spannung V angelegt, welche eine Schwellenspannung VD zum Schalten eines nicht-transparenten Zustandes schaltet oder überschreitet. Zum Ansteuern eines transparenten Zustandes wird die zwischen den Elektroden 1, 2 angelegte Spannung V unterhalb des Schwellenwerts VD belassen.

Zur Vermeidung eines Einbrenneffekts wird im ersten Zustand mit angelegter Spannung V oberhalb der Schwellenspannung VD anstelle einer konstanten Spannung V mit konstantem Spannungswert eine alternierende Spannung V angelegt, so dass abwechselnd ein positiver und ein negativer Schwellenwert VD, VD⁻ über- bzw. unterschritten werden. Unter der Spannung V ist daher üblicherweise eine Differenzspannung zu verstehen, welche zwischen den Elektroden effektiv betragsmäßig und unabhängig von einem Nullpunkt anliegt.

Außerdem allgemein bekannt sind berührungssensitive Eingabeeinrichtungen, welche ebenfalls auf konstruktiven Anordnungen mit dem prinzipiellen Aufbau einer Flüssigkristallanzeige ausgebildet sind. Derartige berührungssensitive Einrichtungen auf Basis von ITO-Elektroden, welche zueinander beabstandet angeordnet sind, unterscheiden sich konstruktiv von Flüssigkristallanzeigen insbesondere dadurch, dass in dem Zwischenraum zwischen den Elektroden keine Flüssigkristallschicht angeordnet ist. Die kapazitiven Sensorschichten haben fast ausschliesslich nur eine Schicht aus metallisch transparenten Elektroden.

Zumindest eine der ITO-Schichten zum Ausbilden einer Elektrodenschicht ist mit einer Vielzahl einzelner Elektroden ausgebildet und auf einem elastischen Material, beispielsweise einer Folie aufgebracht. Durch Druck auf das elastische Material gelangen die ansonsten durch die Abstandsschicht beabstandeten Elektrodenschichten in Berührung, so dass ein Stromfluss über einzelne der Elektroden entsteht. Eine Auswerteschaltung kann den Stromfluss einzelner Elektroden einer bestimmten Position auf der berührungssensitiven Eingabeeinrichtung zuordnen.

Gemäß einer zweiten Ausführungsform sind die einzelnen Elektroden über eine in Fig. 8 skizzierte Kondensatorschaltung an die Auswerteschaltung angeschlossen, um anstelle eines Stromflusses eine Kapazitätswertveränderung zu erfassen. Bei einer solchen Anordnung wird in einer zeitlichen Abfolge über eine Vielzahl von Takten clk eine sägezahnförmige Sensorspannung VS an die einander gegenüberliegenden Elektroden angelegt. Bei Erreichen einer Sensorschwellenspannung VSS wird die Sensorspannung VS wieder auf den Startwert zurückgesetzt und die Anzahl der seit dem letzten Startwert verstrichenen Takte clk gezählt. Das Überschreiten einer bestimmten Taktanzahl clkT dient als Kriterium für ein Objekt, welches sich der berührungssensitiven Einrichtung im Bereich der entsprechenden Elektroden annähert. Durch das Annähern eines kapazitiv aktiven Objektes an die entsprechenden Elektroden verändert sich der Kapazitätswert, was zu einer entsprechend längeren Zeitdauer bis zum Erreichen der Sensorschwellenspannung VSS führt und somit zu einer größeren Taktanzahl clkT.

Die EP 0 340 096 A1 offenbart eine LCD-Anzeigefläche mit integrierter Tastfläche, bei der an einer bzw. mit einem Finger berührten Stelle einer oder mehrere Pixel mittels einer Rechteckspannung angesteuert/angeregt werden.

Die Aufgabe der Erfindung besteht darin, eine LCD-Schaltung bzw. ein entsprechendes Verfahren zum Ansteuern zumindest eines Bildpunktes einer Flüssigkristallanzeige zu, Bereitstellen einer zusätzlichen Funktionalität weiterzuentwickeln sowie eine Flüssigkristallanzeige mit erweiterter Funktionalität vorzuschlagen. Insbesondere soll eine solche Flüssigkristallanzeige neuen Verwendungen und Einsatzgebieten zugeführt werden.

Diese Aufgabe wird gelöst durch LCD-Schaltungen mit den Merkmalen gemäß den Patentansprüchen 1 und 2, durch eine Flüssigkristallanzeige mit den Merkmalen gemäß Patentanspruch 8, durch ein Kommunikationsgerät mit den Merkmalen gemäß Patentanspruch 10 bzw. durch Verfahren mit den Merkmalen gemäß den Patentansprüchen 12 und 13. Vorteilhafte Ausgestaltungen sind Gegenstand von abhängigen Ansprüchen.

Bevorzugt werden demgemäß eine LCD-Schaltung bzw. ein Verfahren zum Ansteuern zumindest eines Bildpunktes einer Flüssigkristallanzeige zum wahlweisen Anlegen einer Spannung zwischen einer ersten und einer zweiten Elektrode, zwischen denen eine Schicht mit Flüssigkristallen angeordnet ist, wobei der Bildpunkt beim Anlegen der Spannung mit einem Wert größer oder gleich des Werts einer Schwellenspannung zwischen den Elektroden einen nicht-transparenten Zustand annimmt, wobei als die Spannung oder als ein Anteil der Spannung unabhängig vom nicht-transparenten oder transparenten Zustand eine Sensorspannung, welche sich über eine Sensorperiode ändert, an zumindest einer der Elektroden angelegt ist zum Erzeugen eines Sensorsignals zum Erfassen einer Annäherung eines Objekts an den Bildpunkt.

Mit anderen Worten ist die Spannung, welche an den Elektroden zum Ansteuern des Bildpunktes angelegt wird, gemäß einer Ausführungsform vorteilhaft aus einer Transparenzspannung und einer Sensorspannung zusammengesetzt. Mittels der Transparenzspannung wird bei Überschreiten einer entsprechenden Schwellenspannung in üblicher Art und Weise der Bildpunkt in einen nicht-transparenten Zustand geschaltet. Unter einem nicht-transparenten Zustand ist dabei auch ein Zustand zu verstehen, welcher üblicherweise als nicht-transparent gilt, auch wenn eine mögliche restliche Transparenz noch gegeben ist. Die überlagerte Sensorspannung wird dabei ebenfalls in für sich bekannter Art und Weise angelegt und überwacht. Die Gesamt- bzw. Differenzspannung zwischen den beiden Elektroden wird so gesteuert, dass diese im Fall des transparenten Zustands des Bildpunktes die Schwellenspannung nicht über-schreitet oder nur so kurz überschreitet, dass eine Molekülausrichtung der Flüssigkristalle zum Umschalten in den nicht- transparenten Zustand oder in einen undefinierten Grauzustand noch nicht erfolgt. Vorzugsweise ist die Differenzspannung zwischen den beiden Elektroden dazu gleich Null.

Vorteilhaft werden somit bereits bestehende ITO-Schichten einer üblichen Flüssigkristallanzeige zusätzlich zur Messung von Kapazitätswerten zur Positionsermittlung sich annähernder Objekte verwendet. Die Schaltung bewirkt einerseits, dass die bestehenden Elektrodenschichten ihren Effekt auf das flüssige Kristall bzw. deren Moleküle über insbesondere eine alternierende Spannung nicht verlieren, dass aber andererseits trotz- dem eine kapazitive Messung durchgeführt werden kann.

Die Schaltung ist bevorzugt zum Andern der Sensorspannung an der ersten und der zweiten Elektrode zum Schalten eines transparenten Zustandes des Bildpunkts derart ausgebildet, dass eine Differenzspannung zwischen den beiden Elektroden gleich Null ist oder eine Differenzspannung zwischen den beiden Elektroden gleich einem einen noch transparenten Zustand des Bildpunkts erzeugenden Wert ist.

Die Schaltung ist bevorzugt ausgebildet mit einer Schalteinrichtung zum Schalten der zweiten Elektrode auf die erste Elektrode zum Schalten des transparenten Zustandes.

Der Sensorspannung wird zum Schalten des nicht-transparenten Zustandes gemäß einer weiteren Ausführungsform vorzugsweise eine Transparenzspannung als eine zusätzliche Spannung oder als eine zusätzliche Spannungskomponente der Spannung überlagert. Diese Schaltung ist bevorzugt zum Schalten eines transparenten Zustandes des Bildpunkts ausgebildet ist zum Ändern des Sensorsignals in einem Spannungsbereich zwischen dem Wert der Schwellenspannung und einer Basisspannung.

Die Schaltung ist bevorzugt ausgebildet zum Schalten des Bildpunkts in den nicht-transparenten Zustand und zum Steuern des Sensorsignals mittels der Sensorspannung in einem Spannungsbereich größer der Schwellenspannung.

Die Schaltung ist bevorzugt ausgebildet, sowohl als Sensorsignal einen Wert einer Kapazität zumindest einer der beiden Elektroden gegen eine Basisspannung zu messen als auch die für die Schaltung des Bildpunkts in den tansparenten oder den nicht-taransparenten Zustand mittels einer Transparenzspannung zwischen den Elektroden anzulegen.

Die Schaltung ist bevorzugt ausgebildet zum Anlegen der sich ändernden Sensorspannung auch während einer Rückführungsdauer, wobei eine Sensorschwellenspannung an einen Spannungsverlauf während der Rückführungsdauer entsprechend anpassbar ist.

Die Schaltung ist bevorzugt zum Schalten des Bildpunkts in den nicht-transparenten Zustand und zum Steuern des Sensorsignals mittels der Sensorspannung in einem Spannungsbereich größer der Schwellenspannung ausgebildet. Vorteilhaft wird entsprechend zum Schalten des nicht-transparenten Zustands die Transparenzspannung auf einen Wert gleich oder größer der Schwellenspannung gesetzt, so dass die Sensorspannung einen zusätzlichen Spannungsbetrag oberhalb der Schwellenspannung beisteuert.

Vorteilhaft sind eine Schaltung oder entsprechend ein Verfahren, welche ausgebildet sind zum Ändern des Sensorsignals in einem Spannungsbereich unterhalb der Schwellenspannung, um einen transparenten Zustand des Bildpunkts zu schalten. Mit anderen Worten wird die Gesamtspannung so angesetzt, dass die Schwellenspannung nicht überschritten wird und die Sensorspannung in einem Bereich unterhalb der Schwellenspannung variiert.

Vorteilhaft sind dazu insbesondere ein Verfahren oder Schaltung nach einem vorstehenden Anspruch zum gleichförmigen Än-dern des Sensorsignals an der ersten und der zweiten Elektrode zum Schalten eines transparenten Zustandes des Bildpunkts derart, dass eine Differenzspannung zwischen den beiden Elektroden gleich Null ist oder Differenzspannung zwischen den beiden Elektroden gleich einem einen noch transparenten Zustand des Bildpunkts erzeugenden Wert ist. Dabei wird somit an beide Elektroden die Sensorspannung angelegt und zumindest der Spannungsverlauf einer der beiden Elektroden zum Erfassen der Annäherung eines Objekts überwacht bzw. analysiert.

Vorteilhaft sind eine Schaltung oder entsprechend ein Verfahren, welche ausgebildet sind zum Überlagern bzw. hinzuaddieren der sich ändernden Sensorspannung über die Transparenzspannung auch während einer Rückführungsdauer, wobei eine Sensorschwellenspannung dies entsprechend berücksichtigt. Eine solche Schaltungssteuerung ermöglicht insbesondere auch verschiedene Perioden für das Ansteuern der Transparenzspannung und der Sensorspannung, da die Sensorschwellenspannung jeweils entsprechend angepasst wird.

Vorteilhaft sind eine Schaltung oder entsprechend ein Verfahren, welche ausgebildet sind, sowohl die Transparenzspannung als auch die sich periodisch Sensorspannung alternierend als positive und negative Spannung anzulegen. Eine solche Schaltungsanordnung ermöglicht einen für sich bekannten Einbrennschutz, da an die Moleküle der Flüssigkristalle abwechselnd eine positive und eine negative Spannung zwischen den beiden Elektroden angelegt wird. Bei einer solchen Schaltung ist beim Umschalten in dem jeweils negativen Spannungsbereich entsprechend natürlich ein negativer Schwellenwert für die Transparenz und ein negativer Sensorschwellenwert für die Sensorfunktion anstelle der ansonsten positiven Schwellenwerte zu berücksichtigen.

Vorteilhaft sind eine Schaltung oder entsprechend ein Verfahren, welche ausgebildet sind, die Sensorperiode als eine feste Periode anzulegen und abhängig von einem betragsmäßig ma- ximalen Spannungswert in der Periode ein entsprechendes Sensorsignal auszugeben. Mit anderen Worten wird die Änderung der Sensorspannung jeweils über eine feste Zeitdauer bzw. feste Anzahl von Takten vorgenommen und insbesondere im Falle einer Sägezahnspannung der Maximalwert bzw. Minimalwert der Spannung bei Erreichen des letzten Taktes als Kriterium herangezogen, ob eine Annäherung eines Objektes erfolgt oder nicht.

Bei einer weiteren Variante werden die Sensorspannung während der Sensorperiode bis zu einer vorgegebenen Sensorschwellenspannung geändert und ein entsprechendes Sen- sorsignals abhängig von einer Dauer der Sensorperiode bis zum Erreichen der vorgegebenen Sensorschwellenspannung. Gemäß dieser alternativen Schaltungsanordnung bzw. der entsprechenden Verfahrensweise wird nicht eine feste Periode zur Änderung der Sensorspannung vorgegeben, sondern ein fester Sensorspannungsschwellenwert vorgegeben und die Anzahl von Takten bzw. die Dauer der Periode gemessen. Wird eine vorgegebene Dauer bzw. Anzahl von Takten überschritten, ist dies ein

Kriterium für ein sich annäherndes Objekt, so dass das Sensorsignal entsprechend geschaltet wird.

Neben dem Schalten eines Sensorsignals zwischen zwei festen Werten zum Signalisieren eines angenäherten Objektes oder eines nicht-angenäherten Objektes sind natürlich auch Sensorsignale ausgebbar, welche einen variablen Wert haben, so dass gegebenenfalls auch eine Annäherung als solche hinsichtlich ihres Abstandes oder der Dimension des sich annähernden Objektes bewertet werden kann. Die Sensorspannung ist bevorzugt eine Sagezahnspannung.

Eigenständig vorteilhaft ist eine Flüssigkristallanzeige mit zumindest einem Bildpunkt und mit einer solchen Schaltung zum Schalten sowohl der Transparenz des Bildpunktes als auch zum Erzeugen eines Sensorsignals zur Signalisierung eines sich dem Bildpunkt annähernden Objektes. Vorteilhaft sind dabei zwei Elektrodenschichten jeweils eine Vielzahl erster bzw. zweiter Elektroden aufweisen, um von beiden Seiten aktivier- bare Sensorelemente auszubilden.

Eigenständig vorteilhaft ist außerdem ein Kommunikationsgerat mit einem ersten Gehäuseteil, welches eine Anzeigeeinrichtung aufweist, mit einem zweiten Gehäuseteil und einem Verstell- Mechanismus zum Verstellen der Gehäuseteile in eine Stellung mit der vom zweiten Gehäuseteil beabstandeten Anzeigeeinrichtung und zum Verstellen der Gehäuseteile in eine Stellung, in der die Anzeigeeinrichtung zu einer Bodenflache des zweiten Gehäuseteils benachbart angeordnet ist, wobei die Bodenflache durch eine derartige Flüssigkristallanzeige ausgebildet ist.

Das Kommunikationsgerät ist bevorzugt mit einer Schaltung ausgestattet zum Schalten zumindest eines überwiegenden Teils von Bildpunkten der Flüssigkristallanzeige in den transparenten Zustand in der zweiten Stellung der Gehäuseteile und zum Schalten zumindest eines überwiegenden Teils von Bildpunkten der Flüssigkristallanzeige in den nicht-transparenten Zustand in der ersten Stellung.

Vorteilhaft ist dabei eine Schaltung zum Schalten einer ersten Elektrodenschicht mit der zumindest einen ersten Elektrode als der der Anzeigeeinrichtung in der ersten Stellung der Gehäuseteile zugewandten Elektrodenschicht als Sensorschicht zum Signalisieren einer Annäherung eines Objektes. Mit anderen Worten ist im aufgeklappten oder aufgeschobenen Zustand des Kommunikationsgerätes in diesem Fall die nach oben gerichtete Bodenfläche des zweiten Gehäuseteils als Sensorschicht ausgebildet.

Vorteilhaft ist dabei eine Schaltung zum Schalten einer zweiten Elektrodenschicht mit der zumindest zweiten Elektrode als der der Anzeigeeinrichtung in der ersten Stellung der Gehäuseteile abgewandten Elektrodenschicht als Sensorschicht. Mit anderen Worten ist im zusammengeklappten Zustand die Bodenschicht durch eine Schicht ausgebildet, welche im durchsichtigen Zustand einen Blick durch den Boden des zusammengeklappten Mobilfunkgerätes auf die Anzeigeeinrichtung des eingeklappten oder aufgeklappten ersten Gehäuseteils ermöglicht, wobei diese Bodenschicht außenseitig, das heißt in diesem Fall auf der von der Anzeigeeinrichtung abgewandten Seite als Sensorschicht geschaltet ist.

Ein solches Kommunikationsgerät ist vorteilhaft mit zusätzlich einer dritten Elektrodenschicht als eine der zweiten Elektrodenschicht benachbarte Elektrodenschicht zum Ausbilden einer Sensorschicht aus der zweiten und der dritten Elektrodenschicht. Dadurch kann im zusammengeklappten Zustand eine Sensoreinrichtung mit einer feineren Sensorstrukturierung ermöglicht werden, falls die erste Sensorschicht zur Anzeige von Bildsymbolen oder Rastermustern größer strukturierte einzelne Elektroden aufweist, als dies für eine Detektion bei Betrieb in zusammengeklapptem Zustand mit der Anzeigeeinrichtung unter der die Bodenschicht ausbildenden Flüssigkristallanzeige sinnvoll wäre.

Ermöglicht wird somit ein klappbares Mobilfunkgerät als Kommunikationsgerät, bei welchem das erste Gehäuseteil mit der Anzeigeeinrichtung auf das zweite Gehäuseteil geklappt wird, wobei die Anzeigeeinrichtung einer Bodenfläche des zweiten Gehäuseteils gegenüberliegend angeordnet wird. Die Bodenfläche ist nicht nur als durchsichtige Fläche ausgestaltet, so dass die Anzeigeeinrichtung auch im zusammengeklappten Zustand betrachtet werden kann, sondern ist mit zusätzlichen Funktionalitäten der bevorzugten Flüssigkristallanzeige ausgestaltet. Dies bedeutet, dass die Bodenfläche als berührungssensitive Fläche geschaltet werden kann, so dass eine Betätigung im zusammengeklappten Zustand von der Außenseite, die der Anzeigefläche dann gegenüberliegt, ermöglicht wird.

Durch die Aktivierung einzelner Elektroden der Flüssigkristallanzeige können dabei optional undurchsichtige Strukturen und/oder Muster in der Bodenfläche eingeblendet werden, welche den Blick auf die eingeklappte Anzeigeeinrichtung teilweise verdecken und Symbole darstellen, welche Hinweise auf eine Berührungsaktivierung geben. Entsprechende Symbole können beispielsweise aber auch über die Anzeigeeinrichtung selber gegeben werden. Im aufgeklappten Zustand kann die durch die Flüssigkristallanzeige ausgebildete Bodenfläche ebenfalls als berührungssensitive Eingabeeinrichtung verwendet werden. Vorteilhafterweise wird in diesem Zustand des Kommunikationsgerätes jedoch die erste Seite mit der im zusammengeklappten Zustand innenseitigen Elektrodenschicht als Sensorschicht verwendet. Durch die Kombination als Flüssigkristallanzeige können in der Bodenfläche einzelne Symbole und/oder Strukturen etc. eingeblendet werden, welche Hinweise auf durch Berührung aktivierbare Funktionen geben.

Zweckmäßigerweise kann im aufgeklappten Zustand die gesamte durch die Flüssigkristallanzeige ausgebildete Bodenfläche undurchsichtig geschaltet werden, wobei vorteilhafterweise einzelne Aktivierbereiche durchsichtig belassen werden, um die berührbaren bzw. aktivierbaren Symbole darzustellen. Gelöst wird somit das technische Problem, dass die Bodenschicht je nach Klappzustand des Kommunikationsgerätes Transparenz, Nicht-Transparenz und Berührungssensitivität bieten können muss.

Neben der besonders bevorzugten Ansteuerung mittels verschiedener Schwellenwerte und überlagerter Spannungswerte in Form der Transparenzspannung und der Sensorspannung, welche an nur zwei Elektrodenschichten bzw. deren einzelne Elektroden angelegt werden, gibt es auch eine alternative, jedoch weniger bevorzugte Lösung. Diese alternative Lösung besteht darin, dass zwei ITO-Schichten in üblicher Art und Weise als eine Flüssigkristallanzeige ausgestaltet werden und zusätzliche Elektrodenstrukturen, insbesondere wiederum in Form von ITO-Strukturen als zusätzliche weitere Schicht aufgeklebt oder in sonstiger Weise darauf befestigt werden. Nachteilhaft ist an dieser Lösung jedoch gegenüber der besonders bevorzugten Lösung eine erhöhte Dicke, eine geringere Transparenz im transparenten Zustand und der konstruktiv höhere Aufwand beim Herstellen der Flüssigkristallanzeige sowie bei deren Verschaltung.

Ein Ausführungsbeispiel wird nachfolgend anhand der Zeichnung näher erläutert. Es zeigen:
- Fig. 1: ein besonders bevorzugtes mobiles Kommunikationsgerät mit einer Bodenfläche, welche durch eine Flüssigkristallanzeige mit zusätzlicher Eigenschaft als berührungssensitive Eingabeeinrichtung ausgestaltet ist, wobei zusätzlich ein Querschnitt durch die Flüssigkristallanzeige sowie eine Steuerspannung für deren Ansteuerung skizziert sind,
- Fig. 2: das Kommunikationsgerät gemäß Fig. 1 in einer zweiten Betriebsstellung mit einer gegen die Bodenfläche geklappten Anzeigeeinrichtung eines zweiten Gehäuseteils,
- Fig. 3: vergrößert das Spannungsdiagramm aus Fig. 1,
- Fig. 4: ein alternatives Spannungsdiagramm,
- Fig. 5A und 5B: jeweils zwei noch weitere Spannungsdiagramme zum Ansteuern von Bildpunkt-Elektroden gemäß einer weiteren Ausführungsform,
- Fig. 6: noch weitere Spannungsdiagramme zum Ansteuern von Bildpunkt-Elektroden gemäß einer weiteren Ausführungsform,
- Fig. 7: schematisch das Prinzip einer Flüssigkristallanzeige gemäß dem Stand der Technik und
- Fig. 8: schematisch das Prinzip der Ansteuerung einer berührungssensitiven Eingabeeinrichtung gemäß dem Stand der Technik.

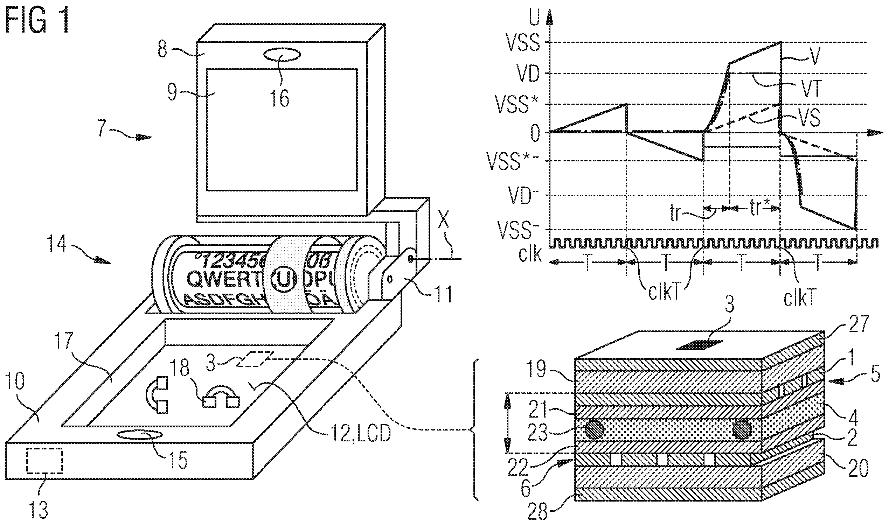

Wie dies aus Fig. 1 ersichtlich ist, wird eine besonders bevorzugte Flüssigkristallanzeige LCD mit einer zusätzlichen Funktionalität als berührungssensitive Eingabeeinrichtung bereitgestellt, wobei eine solche Flüssigkristallanzeige besonders bevorzugt als Bodenfläche 12 eines mobilen Kommunikationsgerätes 7 einsetzbar ist. Jedoch sind auch andere Einsatzmöglichkeiten vorteilhaft umsetzbar, bei denen eine Kombination aus Flüssigkristallanzeige und berührungssensitiver Eingabeeinrichtung gewünscht ist. Im Wesentlichen kann auf für sich bekannte Grundprinzipien des Aufbaus einer üblichen Flüssigkristallanzeige LCD und deren Verschaltung sowie auf Grundprinzipien von Verschaltungen berührungssensitiver Eingabeeinrichtungen auf Basis von ITO-Schichten zurückgegriffen werden.

Das dargestellte mobile Kommunikationsgerät 7 weist ein erstes Gehäuseteil 8 und ein zweites Gehäuseteil 10 auf, welche über einen Verstellmechanismus 11 relativ zueinander verstellbar sind. Insbesondere handelt es sich bei dem Verstell-mechanismus 11 um eine gelenkige Verbindung, um das erste Gehäuseteil 8 mit einer in diesem integrierten Anzeigeeinrichtung 9 gegen eine Wandung des zweiten Gehäuseteils 10 klappen zu können. Alternativ sind jedoch auch andere Mechanismen zum Verschwenken oder Verschieben der entsprechenden Gehäuseteile umsetzbar. Bei dem dargestellten Kommunikationsgerät 7 ist eine Eingabeeinrichtung 14 zum Eingeben von Zeichen und/oder sonstigen Steueranweisungen beispielhaft als rotatorisch bedienbare Anordnung im Bereich einer Verschwenkachse X zum Verschwenken der beiden Gehäuseteile 8, 10 relativ zueinander angeordnet. Jedoch können zusätzlich oder alternativ auch andersartige Eingabeeinrichtungen in Form von beispielsweise Tastaturelementen an einem oder beiden der Gehäuseteile 8, 10 angeordnet werden. Zur Sprachkommunikation weisen die beiden Gehäuseteile 8, 10 ein Mikrofon 15, bzw. einen Lautsprecher 16 auf, wie dies von Mobiltelefonen für sich genommen bekannt ist.

In ebenfalls üblicher Art und Weise ist das Kommunikationsgerät 7 mit einer Schaltung 13 ausgestattet, insbesondere mit einer Schaltung in Form eines integrierten Prozessors. Die Schaltung 13 dient zum Betreiben der verschiedenen Funktionalitäten, welche das Kommunikationsgerät 7 einem Benutzer anbietet. Diese Schaltung 13 oder gegebenenfalls auch eine eigenständige weitere Schaltung dient zusätzlich zum Betreiben der Flüssigkristallanzeige LCD, welche als Bodenfläche in dem zweiten Gehäuseteil 10 ausgebildet ist.

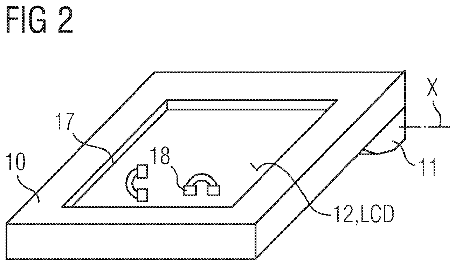

Fig. 1 zeigt das Kommunikationsgerät 7 in einer ersten Stellung, in welcher das zweite Gehäuseteil 10 mit der Anzeigeeinrichtung 9 vom ersten Gehäuseteil 8 beabstandet ist. Fig. 2 zeigt das Kommunikationsgerät 7 aus Fig. 1 in einer zweiten, zusammengeklappten Stellung, in welcher die Anzeigeeinrichtung 9 des ersten Gehäuseteils 8 der Flüssigkristallanzeige LCD des zweiten Gehäuseteils 10 benachbart angeordnet ist. Fig. 2 stellt dabei eine Bodenansicht mit in dieser Ansicht oben liegender Flüssigkristallanzeige LCD dar. Wie insbesondere aus Fig. 1 ersichtlich ist, weist das zweite Gehäuseteil 10 vorzugsweise eine Aussparung 17 auf, welche einen Öffnungsumfang entsprechend dem ersten Gehäuseteil 8 hat und bis zur Flüssigkristallanzeige LCD, 12 hindurchführt.

In zusammengeklappten Zustand kann durch die dann vorzugsweise ganz oder größtenteils in den transparenten Zustand geschaltete Flüssigkristallanzeige LCD hindurch die Anzeigeeinrichtung 9 mit darauf dargestellten Bildern, Symbolen etc. betrachtet werden. Die eigentliche Anzeigeeinrichtung 9 bleibt dadurch auch im zusammengeklappten Zustand sichtbar. Vorzugsweise muss zum Schalten der Flüssigkristallanzeige LCD in den transparenten Zustand keine Transparenzspannung VT an die Flüssigkristallanzeige LCD bzw. deren Elektroden angelegt werden.

Optional können im zusammengeklappten Zustand Zeichen, Raster und/oder Symbole 18 durch entsprechendes Beschalten von Elektroden der Flüssigkristallanzeige LCD und/oder der Anzeigeeinrichtung 9 dargestellt werden. Solche Symbole können vorteilhaft Hinweise auf berührungssensitive Flächen geben, welche zur Aktivierung von Funktionen etc. berührbar sind. Eine solche berührungssensitive Funktionalität als Eingabeeinrichtung wird durch die Flüssigkristallanzeige LCD mit der Zusatzfunktion als berührungssensitive Eingabeeinrichtung bereitgestellt.

In der ersten in Fig. 1 dargestellten Stellung hält ein Benutzer das Kommunikationsgerät üblicherweise so, dass das zweite Gehäuseteil 10 auf der Hand des Benutzers aufliegt.

Die Bodenfläche 12 ist entsprechend mit ihrer oberen Seite, welche nach Wegklappen des ersten Gehäuseteils 8 freigelegt ist, dem Benutzer und seinem Blick zugewandt. In dieser Stellung wird die Flüssigkristallanzeige LCD, welche die Bodenfläche 12 ausbildet, vorzugsweise als von oben bedienbare berührungssensitive Eingabeeinrichtung geschaltet. Dazu wird zweckmäßigerweise nicht mehr die untere Elektrodenschicht sondern die obere Elektrodenschicht der Flüssigkristallanzeige als berührungssensitive Elektrodenschicht geschaltet.

Vorzugsweise wird die Flüssigkristallanzeige LCD in dieser aufgeklappten Stellung vollständig oder nahezu vollständig derart unter Spannung gesetzt, so dass sie in den nicht-transparenten Zustand übergeht. Einzelne Symbole 18, Rasterlinien oder sonstige Zeichen können mittels der Flüssigkristallanzeige LCD abgebildet werden, wobei die Abbildung besonders bevorzugt durch ein Durchsichtig-Schalten der entsprechenden darzustellenden Symbole und Zeichen erfolgt. Dadurch kann die Bodenfläche 12 des zweiten Gehäuseteils 10 als zusätzliche Eingabeeinrichtung mit berührungssensitiver Funktionalität und zugleich Anzeige von Steuerelementen verwendet werden.

Fig. 1 zeigt einen Ausschnitt einer beispielhaften LCD in vergrößerter Darstellung. Gezeigt sind in üblicher Art und Weise zwei Träger 19, 20 aus einem durchsichtigen Material wie Glas, Acryl oder Kunststoff. Auf deren einander zugewandten Oberflächen sind eine erste bzw. eine zweite Elektrodenschicht 5, 6 angeordnet, welche zur Ausbildung von Bildpunkten 3 in einzelne Elektroden 1, 2 untergliedert sind. Auf den einander zugewandten Seiten der beiden Elektrodenschichten 5, 6 sind üblicherweise weitere Schichten als Hartschicht und/oder Polyimid-Schicht 21 bzw. 22 aufgebracht. Zwischen diesen befindet sich ein durch einzelne Abstandhalter 23 gebildeter Raum, in welchem eine Flüssigkristallschicht 4 eingebracht ist. Außenseitig der beiden Trägermaterialien sind Polarisatoren in Form von z.B. Folien 27, 28 aufgebracht.

Das oberhalb des Ausschnitts der Flüssigkristallanzeige LCD skizzierte Spannungsdiagramm zeigt ein beispielhaftes Spannungsdiagramm einer Spannung V, welche an zumindest einem Elektrodenpaar aus einer ersten Elektrode 1 und einer zweiten Elektrode 2 angelegt wird, welche zur Darstellung eines Bildpunkts 3 verwendet werden. Außerdem dient die erste Elektrode 1 bzw. die zweite Elektrode 2 zusätzlich als Sensorelement für eine berührungssensitive Eingabe. Die schaltungsgemäßen Auswertungen erfolgen vorzugsweise kapazitiv in für berührungssensitive Eingabeeinrichtungen für sich bekannter Art und Weise, beispielsweise gemäß dem anhand Fig. 8 skizzierten Prinzip.

Vorgesehen sind zwei verschiedene Spannungsschwellenwerte für die Funktionalität als Flüssigkristallanzeige bzw. als berührungssensitive Eingabeeinrichtung. Die Basisspannung 0 ist beispielsweise eine Erd- bzw. Nullspannung der Schaltungsanordnung 13, kann jedoch prinzipiell auch auf einem anderen Spannungsniveau liegen. Ausgehend von der Basisspannung 0 liegt eine optionale erste Sensorspannungsschwelle VSS* der Basisspannung 0 am nächsten. Oberhalb dieser ersten Sensorspannungsschwelle VSS* liegt eine Schwellenspannung VD für die Funktionalität als Flüssigkristallanzeige LCD und oberhalb dieser Schwellenspannung VD eine weitere Sensorschwellenspannung VSS für die Sensor-Funktionalität.

Über zwei erste Perioden T ist in dem Spannungsdiagramm ein erster Zustand der Flüssigkristallanzeigen LCD bzw. des entsprechenden Bildpunkts 3 mit einem transparenten Zustand dargestellt. Der Verlauf der an die Elektroden 1, 2 angelegten Spannung V bleibt unterhalb der Schwellenspannung VD. In zwei nachfolgenden Perioden T ist der zweite Zustand der Flüssigkristallanzeige LCD bzw. von deren durch die Spannung V angesteuertem Bildpunkt 3 skizziert. In diesem Zustand steigt die Spannung von der Basisspannung 0 ausgehend während einer anfänglichen Zeitdauer als einer Rückführungsdauer tr kürzer oder gleich einer für Flüssigkristallanzeigen üblichen Rückführungsdauer bis zu der Schwellenspannung VD bzw. bis in Spannungsbereiche oberhalb der Schwellenspannung VD an, um für die restliche Zeitdauer tr* dieser Periode T in dem Spannungsbereich gleich oder oberhalb der Schwellenspannung VD zu bleiben. Dadurch wird der entsprechende Bildpunkt 3 für die Dauer der dritten und vierten Periode T in den nicht-transparenten Zustand geschaltet.

Die Ansteuerung des transparenten oder nicht-transparenten Zustands erfolgt durch eine Schwellenspannung VT, welche während der z.B. ersten beiden Perioden T vorzugsweise gleich der Basisspannung 0 ist und während der z.B. beiden nächsten Perioden T jeweils für zumindest die zweite Zeitdauer tr* bis auf die Schwellenspannung VD ansteigt und auf dieser verbleibt.

Um ein Einbrennen zu verhindern, wird dabei eine alternierend in den positiven bzw. negativen Bereich geschaltete Transparenzspannung VT an die Elektroden angelegt, so dass wie dargestellt der Verlauf der Spannung V für jede zweite der Perioden T nicht in den positiven sondern in den negativen Spannungsbereich schaltet. Entsprechend sind weitere Schwellenwerte VSS*⁻, VD⁻ und VSS⁻ im negativen Spannungsbereich vorgesehen, wobei für eine Auswertung die betragsmäßigen Spannungswerte herangezogen werden können.

Für die Sensor-Funktionalität wird als wesentliches Merkmal dieser Ausführungsform eine Sensorspannung VS der Transparenzspannung VT überlagert bzw. dieser hinzuaddiert. Die an den Elektroden 1, 2 angelegte Spannung V setzt sich somit aus der Transparenzspannung VT und zusätzlich der Sensorspannung VS zusammen.

Die Sensorspannung VS weist einen periodischen Verlauf über die jeweiligen Perioden T auf, wobei prinzipiell jegliche sich kontinuierlich ändernde Spannungsfunktion einsetzbar ist. Besonders bevorzugt werden jedoch in für sich bekannter Art und Weise Spannungsverläufe in Art eines Sägezahns, welche zu Beginn einer jeder Periode T mit der Basisspannung 0 starten und kontinuierlich je nach Periode in der positiven bzw. in der negativen Richtung betragsmäßig zunehmen.

Bei Erreichen der ersten Schwellenspannung VSS* endet die Periode T und die Sensorspannung VS wird wieder auf die Basisspannung 0 zurückgeschaltet. Über diese Periode T hinweg wird eine Anzahl clkT von Takten clk innerhalb der Periode T gezählt. Bei Annäherung eines Objekts an die Elektroden 1, 2 des Bildpunktes 3 vergrößert sich der Kapazitätswert, so dass es eine größere Anzahl von Takten dauert, bis die erste Sensorschwellenspannung VSS* bzw. VSS*⁻ erreicht ist und damit die Periode T endet. Die Anzahl clkT der Takte clk ist somit ein direktes Maß für ein sich an die Elektroden 1, 2 annäherndes Objekt. Zusätzlich zu einer üblichen Schaltung zum Ansteuern der Bildpunkte 3 bzw. zum Ansteuern von deren Elektroden 1, 2 zur Schaltung in einen transparenten oder nicht-transparenten Zustand wird somit eine an den Elektroden 1, 2 oder eine an zumindest einer der Elektroden 1, 2 anliegende Kapazität berücksichtigt.

Durch die Überlagerung der Transparenzspannung VT und der Sensorspannung VS wird in der dargestellten dritten und vierten Periode die jeweilige erste Sensorspannung VSS*, VSS*⁻ zwangsläufig überschritten, ohne dabei ein relevantes Kriterium für die Sensoreigenschaft bieten zu können. Entsprechend wird als Kriterium für das Annähern eines Objektes die zweite Sensorschwellenspannung VSS, VSS⁻ herangezogen, wenn der den Elektroden 1, 2 zugeordnete Bildpunkt 3 in den nicht-transparenten Zustand zu schalten ist.

Anstelle die Periodendauer T von dem Erreichen der ersten oder der zweiten Sensorschwellenspannung VSS*, VSS abhängig zu machen, was eine Anpassung der Schaltperioden für die Transparenzspannung VT erforderlich macht oder eine gegebenenfalls komplizierte variable Festlegung der Sensorspannungsschwellen erforderlich macht, kann alternativ auch eine Ausführungsform mit einer festen Periode T geschaltet werden. In diesem Fall wird geprüft, ob innerhalb der Periode T die an den Elektroden angelegte Spannung V eine entsprechend gewählte Sensorschwellenspannung VSS* bzw. VSS überschreitet oder nicht.

Anstelle eines binären Signalwertes zur Angabe der Annäherung eines Objekts oder keiner Annäherung eines Objekts kann auch ein variabler Wert als Sensorsignal ausgegeben werden. Im Fall der ersten Ausführungsform mit variabler Periodendauer würde der Wert der Anzahl clkT der Takte während der Periode T als direktes Maß für einen Annäherungszustand eines Objektes herangezogen werden können. Im Fall der zweiten Ausführungsform mit fester Periode T würde die maximal während der Periode T erreichte Spannung V einen solchen variablen Wert darstellen.

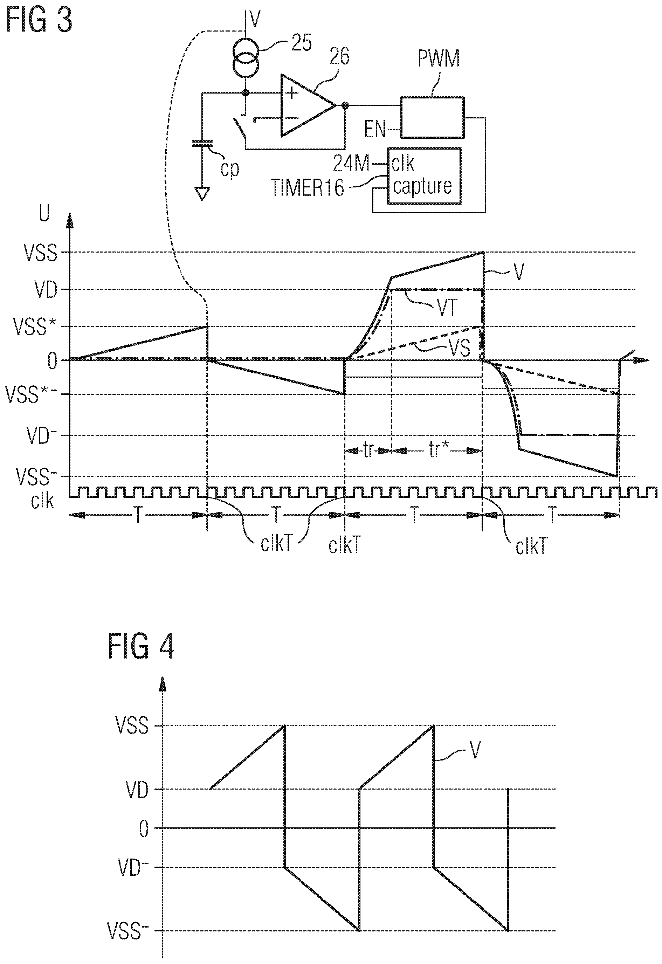

Fig. 3 zeigt zusätzlich zu dem in Fig. 1 skizzierten Spannungsdiagramm schematisch eine für sich bekannte Schaltungsanordnung einer Sensoreinrichtung. Die Sensorspannung VS wird dabei von einer geeigneten Spannungsquelle oder Stromquelle 25 mit Strombegrenzer zum Erzeugen der zunehmenden Spannung bereitgestellt. Beispielsweise kann eine solche Stromquelle 25 durch einen Transistor mit einer Zener-Diode ausgebildet werden. Die Spannung wird an einer der beiden Elektroden 1 oder über beide Elektroden 1, 2 angelegt, wobei die beiden Elektroden 1, 2 zwischen sich einen Kapazitätswert cp aufweisen. Dieser Kapazitätswert cp wird bei Annäherung eines Objekts größer, so dass der Spannungsverlauf eine flachere Steigung aufweist. Mittels eines Operationsverstärkers 26 sowie weiteren nachgeschalteten Komponenten wird in üblicher Art und Weise die Annäherung eines Objektes bestimmt. Die Schaltung 25 legt vorzugsweise eine Spannung V mit verschiedenen Pegeln an, je nachdem, ob ein transparenter oder ein nicht-transparenter Zustand anzusteuern ist.

Aus Fig. 3 ist ersichtlich, dass insbesondere im Fall der Schaltung des nicht-transparenten Zustands der Kurvenverlauf innerhalb einer Periode nicht linear sondern eher variierend zunehmend erfolgt, da insbesondere die Transparenzspannung VT in der Praxis aufgrund von u.a. Relaxationseffekten üblicherweise nicht als reine Rechteckspannung anliegt.

Fig. 4 zeigt einen alternativen Spannungsverlauf für den Fall, dass die Transparenzspannung VT als reine Rechteckspannung angelegt wird und dieser die rein sägezahnförmige Sensorspannung VS überlagert wird für den Fall von vier Perioden mit zueinander alternierenden Vorzeichen und mit Schaltung des Bildpunkts 3 in den nicht-transparenten Zustand.

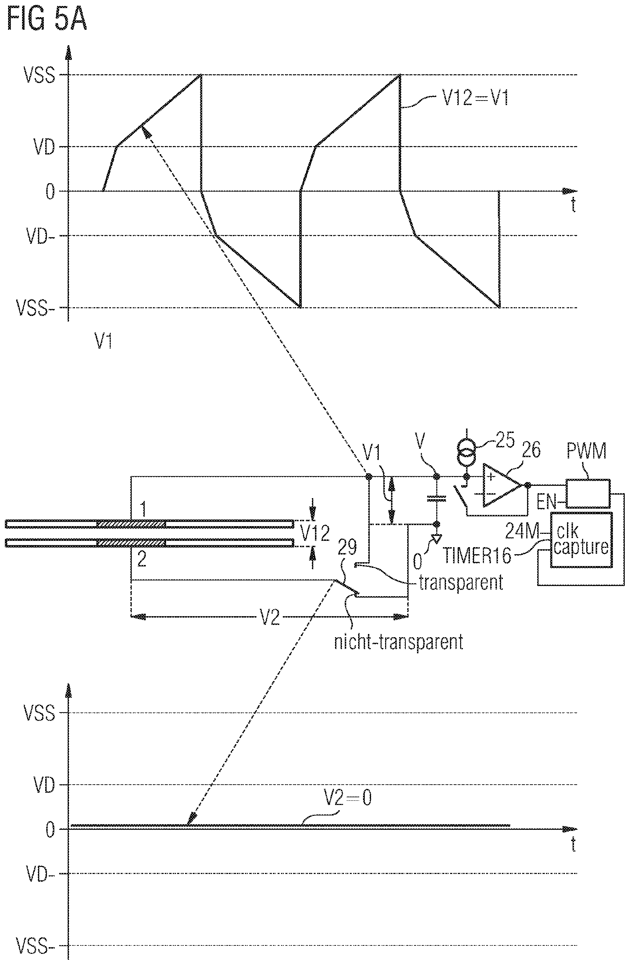

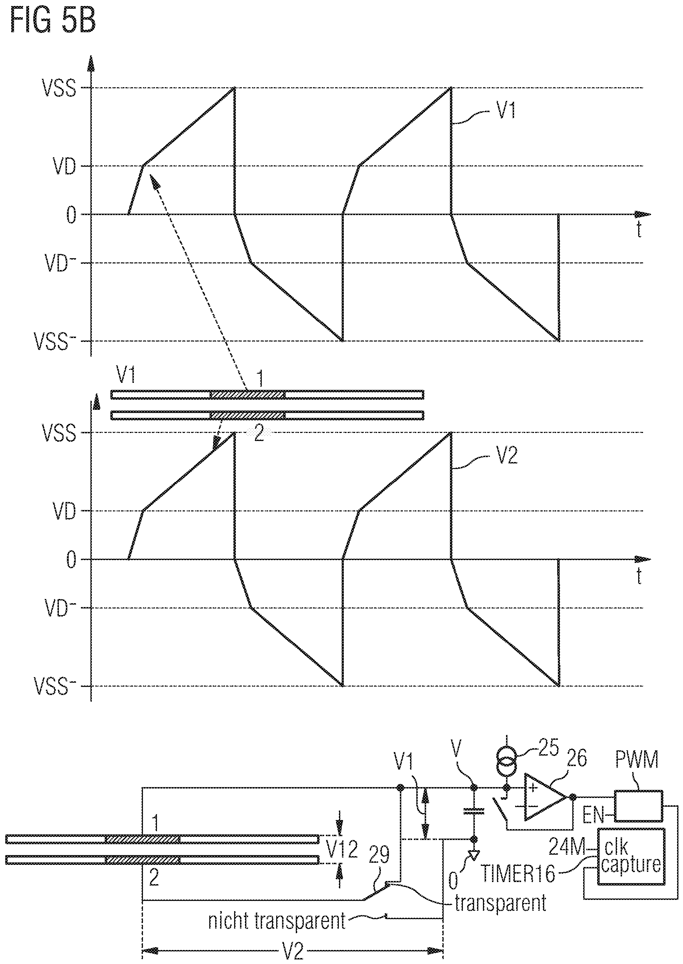

Fig. 5A und 5B zeigen eine weitere Ausführungsform der Beschaltung der ersten und der zweiten Elektrode 1, 2, welche den Bildpunkt 3 ausbilden, wobei der Bildpunkt 3 zugleich als Sensorelement dient. Die obere Spannungskurve zeigt die Spannung V1 der ersten Elektrode 1. Die untere Spannungskurve zeigt die Spannung V2 der zweiten Elektrode 2. V12 symbolisiert die Differenzspannung zwischen den Elektroden 1 und 2. Dargestellt ist außerdem die Schaltung aus Fig. 1 und 3, welche jedoch um einen Schalter als eine Schalteinrichtung 29 ergänzt ist.

Die Schalteinrichtung 29 dient dazu, die beiden Elektroden 1 und 2 zum Schalten des transparenten Zustands aneinander anzulegen bzw. insbesondere kurzzuschließen (Fig. 5B). Dadurch liegen die beiden Elektroden 1, 2 beider sowohl auf der Sensorspannung VS als auch zugleich auf gleichem Wert ihrer Spannungen V1 = V2. Die Differenzspannung V12 liegt entsprechend auf Null. Im anderen Schaltzustand dient die Schalteinrichtung 29 dazu, die beiden Elektroden 1 und 2 zum Schalten des nicht-transparenten Zustands voneinander zu trennen und die zweite Elektrode auf die Basisspannung 0 bzw. Masse zu legen (Fig. 5A). Dabei liegt die erste Elektrode 1 auf der Sensorspannung VS, die hoch genug über den Wert der Differenzspannung V12 bzw. des Schwellenwerts VD steigt, um den Bildpunkt 3 zu schwärzen.

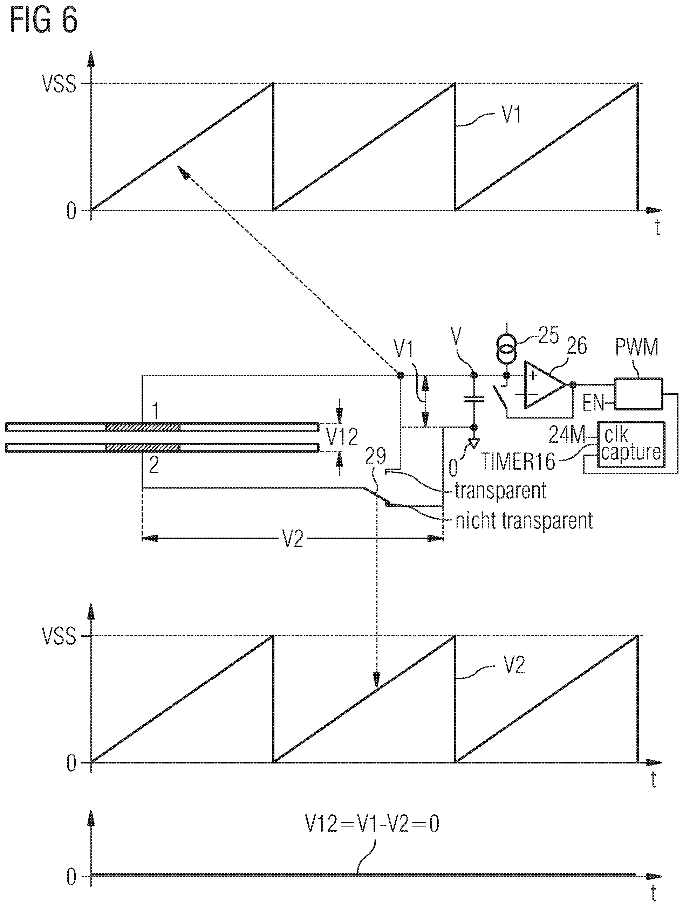

Fig. 6 zeigt das Prinzip der Spannungen V1, V2 gemäß Fig. 5A. Skizziert ist eine alternative Schaltung mit einer Spannungsquelle 25, welche anstelle einer alternierenden Spannung V eine Spannung V mit nur in einer Richtung ansteigendem Sägezahnverlauf bewirkt.

Vorteilhaft umsetzbar sind nicht nur Kombinationen der einzelnen beschriebenen Komponenten und Funktionen sondern auch modifizierte Ausführungsformen mit diesen Grundgedanken. Beispielsweise kann im geöffneten Zustand des Mobilgeräts die gesamte dann untere Fläche der zweiten Elektrodenschicht 6 vorteilhaft auf Masse gelegt werden, um von unten her störende Einflüsse durch eine das Gerät haltende Hand eines Benutzers zu verhindern.

## Patentansprüche

1. LCD-Schaltung zum Ansteuern zumindest eines Bildpunktes (3) einer Flüssigkristallanzeige (LCD) zum wahlweisen Anlegen einer Spannung (V) zwischen einer ersten und einer zweiten Elektrode (1, 2), zwischen denen eine Schicht (4) mit Flüssigkristallen angeordnet ist, wobei der Bildpunkt (3) beim Anlegen der Spannung (V) mit einem Wert größer oder gleich des Werts einer Schwellenspannung (VD, VD⁻) zwischen den Elektroden (1,2) einen nicht-transparenten Zustand annimmt,
wobei
als die Spannung (V) oder als ein Anteil der Spannung (V) unabhängig vom nicht-transparenten oder transparenten Zustand eine Sensorspannung (VS), welche sich über eine Sensorperiode (T) ändert, an zumindest einer der Elektroden (1, 2)) angelegt ist zum Erzeugen eines Sensorsignals zum Erfassen einer Annäherung eines Objekts an den Bildpunkt (3),
**dadurch gekennzeichnet, dass**
die Schaltung ausgebildet ist, die Sensorperiode (T) als eine feste Periode anzulegen und abhängig von einem maximalen Spannungswert in der Periode ein entsprechendes Sensorsignal auszugeben.

2. LCD-Schaltung zum Ansteuern zumindest eines Bildpunktes (3) einer Flüssigkristallanzeige (LCD) zum wahlweisen Anlegen einer Spannung (V) zwischen einer ersten und einer zweiten Elektrode (1, 2), zwischen denen eine Schicht (4) mit Flüssigkristallen angeordnet ist, wobei der Bildpunkt (3) beim Anlegen der Spannung (V) mit einem Wert größer oder gleich des Werts einer Schwellenspannung (VD, VD⁻) zwischen den Elektroden (1,2) einen nicht-transparenten Zustand annimmt,
wobei
als die Spannung (V) oder als ein Anteil der Spannung (V) unabhängig vom nicht-transparenten oder transparenten Zustand eine Sensorspannung (VS), welche sich über eine Sensorperiode (T) ändert, an zumindest einer der Elektroden (1, 2)) angelegt ist zum Erzeugen eines Sensorsignals zum Erfassen einer Annäherung eines Objekts an den Bildpunkt (3),
**dadurch gekennzeichnet, dass**
die Schaltung ausgebildet ist zum Ändern der Sensorspannung (VS) während der Sensorperiode (T) bis zu einer vorgegebenen Sensorschwellenspannung (VSS, VSS*) und zum Erzeugen eines entsprechenden Sensorsignals abhängig von einer Dauer der Sensorperiode (T) bis zum Erreichen der vorgegebenen Sensorschwellenspannung (VSS, VSS*).

3. Schaltung nach Anspruch 1 oder 2,
- zum Ändern der Sensorspannung (VS) an der ersten und der zweiten Elektrode (1, 2) zum Schalten eines transparenten Zustandes des Bildpunkts (3) derart, dass eine Differenzspannung zwischen den beiden Elektroden (1, 2) gleich Null ist oder eine Differenzspannung zwischen den beiden Elektroden (1,2) gleich einem einen noch transparenten Zustand des Bildpunkts (3) erzeugenden Wert ist; und/oder
- mit einer Schalteinrichtung (29) zum Schalten der zweiten Elektrode (2) auf die erste Elektrode (1) zum Schalten des transparenten Zustandes.

4. Schaltung nach Anspruch 1 oder 2, bei welcher der Sensorspannung (VS) zum Schalten des nicht-transparenten Zustandes eine Transparenzspannung (VT) als eine zusätzliche Spannung oder als eine zusätzliche Spannungskomponente der Spannung (V) überlagert wird.

5. Schaltung nach Anspruch 4, welche zum Schalten eines transparenten Zustandes des Bildpunkts (3) ausgebildet ist zum Ändern des Sensorsignals in einem Spannungsbereich zwischen dem Wert der Schwellenspannung (VD, VD⁻) und einer Basisspannung (0).

6. Schaltung nach einem vorstehenden Anspruch,
- welche ausgebildet ist zum Schalten des Bildpunkts (3) in den nicht-transparenten Zustand und zum Steuern des Sensorsignals mittels der Sensorspannung (VS) in einem Spannungsbereich größer der Schwellenspannung (VD, VD⁻); und/oder
- welche ausgebildet ist,
-- sowohl als Sensorsignal einen Wert einer Kapazität (cp) zumindest einer der beiden Elektroden (1, 2) gegen eine Basisspannung (0) zu messen
-- als auch eine Transparenzspannung (VT) zwischen den Elektroden (1, 2) für die Schaltung des Bildpunkts (3) in den transparenten oder den nicht-transparenten Zustand anzulegen;
und/oder
- welche ausgebildet ist zum Anlegen der sich ändernden Sensorspannung (VS) auch während einer Rückführungsdauer (tr), wobei eine Sensorschwellenspannung (VSS, VSS*) an einen Spannungsverlauf während der Rückführungsdauer entsprechend anpassbar ist; und/oder
- welche ausgebildet ist, die Spannung (V) einschließlich der sich periodisch ändernden Sensorspannung (VS) alternierend als positive und negative Spannung (V) anzulegen.

7. Schaltung nach einem vorstehenden Anspruch, bei welcher die Sensorspannung (VS) eine Sägezahnspannung ist.

8. Flüssigkristallanzeige (LCD) mit zumindest einem Bildpunkt (3) und mit einer Schaltung nach einem vorstehenden Anspruch zum Schalten der Transparenz des Bildpunktes (3) und zum Erzeugen eines Sensorsignals zur Signalisierung eines sich dem Bildpunkt annähernden Objekts.

9. Flüssigkristallanzeige nach Anspruch 8, bei welcher zwei Elektrodenschichten (5, 6) jeweils eine Vielzahl erster bzw. zweiter Elektroden (1, 2) aufweisen zum Ausbilden von von beiden Seiten aktivierbaren Sensorelementen.

10. Kommunikationsgerät (7) mit
- einem ersten Gehäuseteil (8), welches eine Anzeigeeinrichtung (9) aufweist,
- einem zweiten Gehäuseteil (10) und
- einem Verstell-Mechanismus (11) zum Verstellen der Gehäuseteile (8, 10) in eine Stellung mit der vom zweiten Gehäuseteil (10) beabstandeten Anzeigeeinrichtung (9) und zum Verstellen der Gehäuseteile (8, 10) in eine Stellung mit der zu einer Bodenfläche (12) des zweiten Gehäuseteils (10) benachbarten Anzeigeeinrichtung (9),
**dadurch gekennzeichnet, dass**
die Bodenfläche (12) durch eine Flüssigkristallanzeige (LCD) nach Anspruch 8 oder 9 ausgebildet ist.

11. Kommunikationsgerät nach Anspruch 10,
- mit einer Schaltung (13) zum Schalten zumindest eines überwiegenden Teils von Bildpunkten der Flüssigkristallanzeige (LCD) in den transparenten Zustand in der zweiten Stellung der Gehäuseteile (8, 10) und zum Schalten zumindest eines überwiegenden Teils von Bildpunkten (3) der Flüssigkristallanzeige (LCD) in den nicht-transparenten Zustand in der ersten Stellung; und/oder
- mit einer Schaltung (13) zum Schalten einer ersten Elektrodenschicht (5) mit der zumindest ersten Elektrode (1) als der der Anzeigeeinrichtung (9) in der ersten Stellung der Gehäuseteile (8, 10) zugewandten Elektrodenschicht (1) als Sensorschicht zum Signalisieren einer Annäherung eines Objektes; und/oder
- mit einer Schaltung (13) zum Schalten einer zweiten Elektrodenschicht (6) mit der zumindest zweiten Elektrode (2) als der der Anzeigeeinrichtung (9) in der ersten Stellung der Gehäuseteile (8, 10) abgewandten Elektrodenschicht (6) als Sensorschicht.

12. Verfahren zum Ansteuern zumindest eines Bildpunktes (3) einer Flüssigkristallanzeige (LCD) zum wahlweisen Anlegen einer Spannung (V) zwischen einer ersten und einer zweiten Elektrode (1, 2), zwischen denen eine Schicht (4) mit Flüssigkristallen angeordnet ist, derart, dass der Bildpunkt (3) beim Anlegen der Spannung (V) mit einem Wert größer oder gleich des Werts einer Schwellenspannung (VD, VD⁻) zwischen den Elektroden (1,2) einen nicht-transparenten Zustand annimmt,
wobei als die Spannung (V) oder als ein Anteil der Spannung (V) unabhängig vom nicht-transparenten oder transparenten Zustand eine Sensorspannung (VS), welche sich über eine Sensorperiode (T) ändert, an zumindest einer der Elektroden (1,2)) angelegt wird zum Erzeugen eines Sensorsignals zum Erfassen einer Annäherung eines Objekts an den Bildpunkt (3),
**dadurch gekennzeichnet, dass**
die Sensorperiode (T) als feste Periode angelegt wird und abhängig von einem maximalen Spannungswert in der Periode ein entsprechendes Sensorsignal ausgegeben wird.

13. Verfahren zum Ansteuern zumindest eines Bildpunktes (3) einer Flüssigkristallanzeige (LCD) zum wahlweisen Anlegen einer Spannung (V) zwischen einer ersten und einer zweiten Elektrode (1, 2), zwischen denen eine Schicht (4) mit Flüssigkristallen angeordnet ist, derart, dass der Bildpunkt (3) beim Anlegen der Spannung (V) mit einem Wert größer oder gleich des Werts einer Schwellenspannung (VD, VD⁻) zwischen den Elektroden (1,2) einen nicht-transparenten Zustand annimmt,
wobei als die Spannung (V) oder als ein Anteil der Spannung (V) unabhängig vom nicht-transparenten oder transparenten Zustand eine Sensorspannung (VS), welche sich über eine Sensorperiode (T) ändert, an zumindest einer der Elektroden (1, 2)) angelegt wird zum Erzeugen eines Sensorsignals zum Erfassen einer Annäherung eines Objekts an den Bildpunkt (3),
**dadurch gekennzeichnet, dass**
die Sensorspannung (VS) während der Sensorperiode (T) bis zu einer vorgegebenen Sensorschwellenspannung (VSS, VSS*) geändert wird und ein entsprechendes Sensorsignals abhängig von einer Dauer der Sensorperiode (T) bis zum Erreichen der vorgegebenen Sensorschwellenspannung (VSS, VSS*) erzeugt wird.

14. Verfahren nach Anspruch 12 oder 13,
- bei dem die Sensorspannung (VS) an der ersten und der zweiten Elektrode (1,2) zum Schalten eines transparenten Zustandes des Bildpunkts (3) derart geändert wird, dass eine Differenzspannung zwischen den beiden Elektroden (1, 2) gleich Null ist oder eine Differenzspannung zwischen den beiden Elektroden (1, 2) gleich einem Wert ist, der einen noch transparenten Zustand des Bildpunkts (3) erzeugt; und/oder
- bei dem zum Schalten des transparenten Zustandes die zweite Elektrode (2) auf die erste Elektrode (1) geschaltet wird; und/oder
- bei dem der Sensorspannung (VS) zum Schalten des nicht-transparenten Zustandes eine Transparenzspannung (VT) als eine zusätzliche Spannung oder als eine zusätzliche Spannungskomponente der Spannung (V) überlagert wird; und/oder
- bei dem zum Schalten eines transparenten Zustandes des Bildpunkts (3) das Sensorsignal in einem Spannungsbereich zwischen dem Wert der Schwellenspannung (VD, VD⁻) und einer Basisspannung (0) geändert wird; und/oder
- bei dem
-- sowohl als Sensorsignal ein Wert einer Kapazität (cp) zumindest einer der beiden Elektroden (1, 2) gegen eine Basisspannung (0) gemessen wird
-- als auch für die Schaltung des Bildpunkts (3) in den transparenten oder den nicht-transparenten Zustand eine Transparenzspannung (VT) zwischen den Elektroden (1, 2) größer einem betragsmäßigen Wert des Schwellenwerts (VD, VD⁻) angelegt wird.

## Claims

1. An LCD circuit for triggering at least one pixel (3) of a liquid crystal display (LCD) to selectively apply a voltage (V) between a first and a second electrode (1, 2) between which a layer (4) of liquid crystals is arranged, wherein the pixel switches into a non-transparent state if the voltage (V) having a value greater than or equal to the value of the threshold voltage (VD, VD⁻) is applied between the electrodes (1, 2), wherein
independent from the non-transparent or the transparent state a sensor voltage (V5), which changes across a sensor period (T), is applied to at least one of the electrodes (1, 2) as the voltage (V) or part of the voltage (V), in order to generate a sensor signal for detecting an object approaching the pixel (3),
**characterized in that**
the circuit is configured for applying the sensor period (T) as fixed period and for outputting a respective sensor signal depending from a maximum voltage value in the sensor period.

2. An LCD circuit for triggering at least one pixel (3) of a liquid crystal display (LCD) to selectively apply a voltage (V) between a first and a second electrode (1, 2), between which a layer (4) of liquid crystals is arranged, wherein the pixel switches into a non-transparent state if the voltage (V) having a value greater than or equal to the value of the threshold voltage (VD, VD⁻) is applied between the electrodes (1, 2), wherein
independent from the non-transparent or the transparent state a sensor voltage (VS), which changes across a sensor period (T), is applied to at least one of the electrodes (1, 2) as the voltage (V) or part of the voltage (V), in order to generate a sensor signal for detecting an object approaching the pixel (3),
**characterized in that**
the circuit is configured to change the sensor voltage (VS) during the sensor period (T) up to a predefined sensor threshold voltage (VSS, VSS*) and generate a respective sensor signal depending from the duration of the sensor period (T) until the predefined sensor threshold voltage (VSS, VSS*) is reached.

3. The circuit as claimed in claim 1 or 2,
- configured to change the sensor voltage (VS) on the first and the second electrodes (1,2) for switching into a transparent state of the pixel (3) such that a difference voltage between the two electrodes is equal to zero or a difference voltage between the two electrodes (1, 2) is equal to a value effecting that the pixel (3) is still in a transparent state, and/or
- comprising a switching device (29) for switching the second electrode (2) to the first electrode (1) for triggering the transparent state.

4. The circuit as claimed in claim 1 or 2, wherein, for triggering the non-transparent state, a transparency voltage (VT) as an additional voltage or as an additional voltage component of the voltage (V) is superimposed on the sensor voltage.

5. The circuit as claimed in claim 4, which is configured for triggering a transparent state of the pixel (3) to change the sensor signal within a voltage range between the value of the threshold voltage (VD, VD⁻) and a base voltage (0).

6. The circuit as claimed in of the preceding claims,
- configured to switch the pixel (3) in the non-transparent state and for controlling the sensor signal by means of the sensor voltage (VS) in a voltage range larger than the threshold voltage (VD, VD⁻); and/or
- configured to
-- measure, as the sensor signal, the value of a capacity (cp) of at least one of the two electrodes (1, 2) against a base voltage (0), as well as
-- apply a transparency voltage (VT) between the electrodes (1, 2) for switching the pixel (3) into the transparent or the non-transparent state; and/or
- configured to apply the changing sensor voltage also during a feedback duration (tr), wherein a sensor threshold voltage (VSS, VSS*) is accordingly adaptable to a voltage curve during the feedback duration, and/or
- configured to apply the voltage (V) including the periodically changing sensor voltage (VS) alternately as a positive and as a negative voltage (V).

7. The circuit as claimed in one the preceding claims, wherein the sensor voltage (VS) is a saw tooth-like voltage.

8. A liquid crystal display (LCD) having at least one pixel (3) and including a circuit according to one of the preceding claims for triggering the transparency of the pixel (3) and for generating a sensor signal for signaling an object approaching the pixel.

9. The liquid crystal display as claimed in claim 8, wherein two electrode layers (5, 6) respectively have a plurality of first and second electrodes (1, 2), respectively, for forming sensor elements that may be activated from both sides.

10. A communications device (7), comprising:
- a first housing part (8) including a display device (9);
- a second housing part (10); and
- an adjustment mechanism (11) for moving the housing parts (8, 10) into a position, in which the display device (9) is located at a distance from the second housing part (10), and for moving the housing parts (8, 10) into a position, in which the display device (9) is adjacent to a bottom area (12) of the second housing part (10),
**characterized in that**
the bottom area (12) is formed by a liquid crystal display (LCD) according to claim 8 or 9.

11. The communications device as claimed in claim 10, further comprising
- a circuit (13) for switching at least a predominant proportion of pixels of the liquid crystal display (LCD) into the transparent state in the second position of the housing parts (8, 10) and for switching at least a predominant proportion of pixels (3) of the liquid crystal display (LCD) into the non-transparent state in the first position, and/or
- a circuit (13) for switching a first electrode layer (5) with the at least one first electrode (1) as the electrode layer facing the display device (9) in the first position of the housing parts (8, 10) as sensor layer for signaling an approaching object, and/or
- a circuit (13) for switching a second electrode layer (6) with the at least one second electrode (2) as the electrode layer facing away from the display device (9) in the first position of the housing parts (8, 10) as sensor layer.

12. A method of triggering at least one pixel (3) of a liquid crystal device (LCD), the method for selectively applying a voltage (V) between a first and a second electrode (1, 2) between which a layer (4) of liquid crystals is arranged such that the pixel (3) assumes a non-transparent state if the voltage (V) having a value of greater than or equal to the value of a threshold voltage (VD, VD*) is applied between the electrodes (1, 2), wherein
independent from the non-transparent or the transparent state a sensor voltage (VS), which changes across a sensor period (T), is applied to at least one of the electrodes (1, 2) as the voltage (V) or part of the voltage (V), in order to generate a sensor signal for detecting an object approaching the pixel (3),
**characterized in that**
the sensor period (T) is applied as fixed period and a respective sensor signal is outputted in dependence from a maximum voltage value in the period.

13. A method of triggering at least one pixel (3) of a liquid crystal device (LCD), the method for selectively applying a voltage (V) between a first and a second electrode (1, 2), between which a layer (4) of liquid crystals is arranged such that the pixel (3) assumes a non-transparent state, if the voltage (V) having a value of greater than or equal to the value of a threshold voltage (VD, VD⁻) is applied between the electrodes (1, 2), wherein
independent from the non-transparent or the transparent state a sensor voltage (VS), which changes across a sensor period (T), is applied to at least one of the electrodes (1, 2) as the voltage (V) or part of the voltage (V), in order to generate a sensor signal for detecting an object approaching the pixel (3),
**characterized by**
the sensor voltage (VS) is changed during the sensor period (T) up to a predefined sensor threshold voltage (VSS, VSS*) and a respective sensor signal is generated depending on the duration of the sensor period (T) until the predefined threshold voltage is reached.

14. The method as claimed in claim 12 or 13,
- wherein the sensor voltage (VS) on the first and the second electrode (1, 2) is changed for switching into a transparent state of the pixel (3) such that a difference voltage between the two electrodes (1, 2) is equal to zero or a difference voltage between the two electrodes (1, 2) is equal to a value, at which the pixel (3) is still in a transparent state; and/or
- the second electrode (2) is connected to the first electrode (1) to switch into the transparent state; and/or
- wherein, for switching into the non-transparent state, a transparency voltage (VT) as an additional voltage or as an additional voltage component of the voltage (V) is superimposed on the sensor voltage (VS); and/or
- wherein, for triggering a transparent state of the pixel (3), the sensor signal (VS) is changed within a voltage range between the value of the threshold voltage (VD, VD⁻) and a base voltage (0); and/or
- wherein
-- a value of a capacity (cp) of at least one of the two electrodes (1, 2) against a base voltage (0) is measured as sensor signal, as well as
-- a transparency voltage (VT), which is greater than a nominal value of the threshold value (VD, VD⁻), is applied between the electrodes (1, 2) for switching the pixel into the transparent or the non-transparent state.

## Revendications

1. Circuit LCD servant à commander au moins un pixel (3) d'un affichage à cristaux liquides (LCD) pour appliquer au choix une tension (V) entre une première et une deuxième électrode (1, 2) entre lesquelles est disposée une couche (4) de cristaux liquides, le pixel (3) prenant un état non transparent lors de l'application de la tension (V) avec une valeur supérieure ou égale à la valeur d'une tension de seuil (VD, VD⁻) entre les électrodes (1, 2),
dans lequel une tension de détection (VS) qui varie sur une période de détection (T), est appliquée indépendamment de l'état non transparent ou transparent à au moins une des électrodes (1, 2) en tant que la tension (V) ou en tant qu'une partie de la tension (V) pour produire un signal de détection servant à détecter l'approche d'un objet (5) du pixel (3),
**caractérisé en ce que**
le circuit est configuré pour appliquer la période de détection (T) sous la forme d'une période fixe et pour délivrer, en fonction d'une valeur de tension maximale dans la période, un signal de détection correspondant.

2. Circuit LCD servant à commander au moins un pixel (3) d'un affichage à cristaux liquides (LCD) pour appliquer au choix une tension (V) entre une première et une deuxième électrode (1, 2) entre lesquelles est disposée une couche (4) de cristaux liquides, le pixel (3) prenant un état non transparent fors de l'application de la tension (V) avec une valeur supérieure ou égale à la valeur d'une tension de seuil (VD, VD⁻) entre les électrodes (1, 2),
dans lequel une tension de détection (VS) qui varie sur une période de détection (T), est appliquée indépendamment de l'état non transparent ou transparent à au moins une des électrodes (1, 2) en tant que la tension (V) ou en tant qu'une partie de la tension (V) pour produire un signal de détection servant à détecter l'approche d'un objet (5) du pixel (3),
**caractérisé en ce que**
le circuit est configuré pour faire varier la tension de détection (VS) pendant la période de détection (T) jusqu'à une tension de seuil de détection (VSS, VSS*) prédéfinie et pour produire un signal de détection correspondant en fonction d'une durée de la période de détection (T) jusqu'à ce que la tension de seuil de détection (VSS, VSS*) prédéfinie soit atteinte.

3. Circuit selon la revendication 1 ou la revendication 2,
- destiné à faire varier la tension de détection (VS) à la première et la deuxième électrode (1, 2) afin de déclencher un état transparent du pixel (3) de telle sorte qu'une tension différentielle entre les deux électrodes (1, 2) soit égale à zéro ou qu'une tension différentielle entre les deux électrodes (1, 2) soit égale à une valeur produisant un état encore transparent du pixel (3) ; et/ou
- comprenant un dispositif de commutation (29) pour commuter la deuxième électrode (2) sur la première électrode (1) afin de déclencher l'état transparent.

4. Circuit selon la revendication 1 ou la revendication 2, dans lequel une tension de transparence (VT) sous la forme d'une tension supplémentaire ou d'une composante de tension supplémentaire de la tension (V) est superposée à la tension de détection (VS) pour déclencher l'état non transparent.

5. Circuit selon la revendication 4, lequel est configuré pour déclencher un état transparent du pixel (3) pour faire varier le signal de détection dans une plage de tension comprise entre la valeur de la tension de seuil (VD, VD⁻) et une tension de base (0).

6. Circuit selon l'une des revendications précédentes,
- lequel est configuré pour commuter le pixel (3) dans l'état non transparent et pour commander le signal de détection au moyen de la tension de détection (VS) dans une plage de tension supérieure à la tension de seuil (VD, VD⁻) ; et/ou
- lequel est configuré
-- pour mesurer une valeur d'une capacité (cp) d'au moins une des deux électrodes (1, 2) en tant que signal de détection par rapport à une tension de base (0), ainsi que
-- pour appliquer une tension de transparence (VT) entre les électrodes (1, 2) pour la commutation du pixel (3) dans l'état transparent ou non transparent ;
et/ou
- lequel est configuré pour appliquer la tension de détection (VS) variable aussi pendant une durée de rétroaction (tr), une tension de seuil de détection (VSS, VSS*) étant adaptable à une variation de tension pendant la durée de rétroaction ;
et/ou
- lequel est configuré pour appliquer la tension (V), y compris la tension de détection (VS) périodiquement variable, alternativement comme tension positive et négative (V).

7. Circuit selon l'une des revendications précédentes, dans lequel la tension de détection (VS) est une tension en dents de scie.

8. Affichage à cristaux liquides (LCD) comprenant au moins un pixel (3) et un circuit selon l'une des revendications précédentes pour déclencher la transparence du pixel (3) et pour produire un signal de détection pour signaler un objet s'approchant du pixel.

9. Affichage à cristaux liquides selon la revendication 8, dans lequel deux couches d'électrodes (5, 6) comprennent chacune une pluralité de premières ou deuxièmes électrodes (1, 2) pour former des éléments de détection activables des deux côtés.

10. Appareil de communication (7) comprenant
- une première partie de boîtier (8) comportant un dispositif d'affichage (9),
- une deuxième partie de boîtier (10) et
- un mécanisme de déplacement (11) pour déplacer les parties de boîtier (8, 10) dans une position dans laquelle le dispositif d'affichage (9) est espacé de la deuxième partie de boîtier (10) et pour déplacer les parties de boîtier (8, 10) dans une position dans laquelle le dispositif d'affichage (9) est adjacent à une surface de fond (12) de la deuxième partie de boîtier (10),
**caractérisé en ce que**
la surface de fond (12) est conformée par un affichage à cristaux liquides (LCD) selon la revendication 8 ou la revendication 9.

11. Appareil de communication selon la revendication 10,
- comprenant un circuit (13) pour commuter au moins une majeure partie des pixels de l'affichage à cristaux liquides (LCD) dans l'état transparent dans la deuxième position des parties de boîtier (8, 10) et pour commuter au moins une majeure partie des pixels (3) de l'affichage à cristaux liquides (LCD) dans l'état non transparent dans la première position ; et/ou
- comprenant un circuit (13) pour commuter une première couche d'électrodes (5) avec ladite au moins première électrode (1) formant la couche d'électrodes (1) tournée vers le dispositif d'affichage (9) dans la première position des parties de boîtier (8, 9) en tant que couche de détection pour signaler l'approche d'un objet ; et/ou
- comprenant un circuit (13) pour commuter une deuxième couche d'électrodes (6) avec ladite au moins deuxième électrode (2) formant la couche d'électrodes (6) à l'opposé du dispositif d'affichage (9) dans la première position des parties de boîtier (8, 9) en tant que couche de détection.

12. Procédé pour commander au moins un pixel (3) d'un affichage à cristaux liquides (LCD) pour appliquer au choix une tension (V) entre une première et une deuxième électrode (1, 2) entre lesquelles est disposée une couche (4) de cristaux liquides, de telle sorte que le pixel (3) prenne un état non transparent lors de l'application de la tension (V) avec une valeur supérieure ou égale à la valeur d'une tension de seuil (VD, VD⁻) entre les électrodes (1, 2),
dans lequel une tension de détection (VS) qui varie sur une période de détection (T), est appliquée indépendamment de l'état non transparent ou transparent à au moins une des électrodes (1, 2) en tant que la tension (V) ou en tant qu'une partie de la tension (V) pour produire un signal de détection servant à détecter l'approche d'un objet (5) du pixel (3),
**caractérisé en ce que**
la période de détection (T) est appliquée sous la forme d'une période fixe et pour délivrer, en fonction d'une valeur de tension maximale dans la période, un signal de détection correspondant est délivré.

13. Procédé pour commander au moins un pixel (3) d'un affichage à cristaux liquides (LCD) pour appliquer au choix une tension (V) entre une première et une deuxième électrode (1, 2) entre lesquelles est disposée une couche (4) de cristaux liquides, de telle sorte que le pixel (3) prenne un état non transparent lors de l'application de la tension (V) avec une valeur supérieure ou égale à la valeur d'une tension de seuil (VD, VD⁻) entre les électrodes (1, 2),
dans lequel une tension de détection (VS) qui varie sur une période de détection (T), est appliquée indépendamment de l'état non transparent ou transparent à au moins une des électrodes (1, 2) en tant que la tension (V) ou en tant qu'une partie de la tension (V) pour produire un signal de détection servant à détecter l'approche d'un objet (5) du pixel (3),
**caractérisé en ce que**
la tension de détection (VS) est variée pendant la période de détection (T) jusqu'à une tension de seuil de détection (VSS, VSS*) prédéfinie et un signal de détection est produit correspondant en fonction d'une durée de la période de détection (T) jusqu'à ce que la tension de seuil de détection (VSS, VSS*) prédéfinie soit atteinte.

14. Procédé selon la revendication 12 ou la revendication 13,
- dans lequel on fait varier la tension de détection (VS) à la première et la deuxième électrode (1, 2) pour déclencher un état transparent du pixel (3) de telle sorte qu'une tension différentielle entre les deux électrodes (1, 2) soit égale à zéro ou qu'une tension différentielle entre les deux électrodes (1, 2) soit égale à une valeur qui produit un état encore transparent du pixel (3) ; et/ou
- dans lequel, pour déclencher l'état transparent, on commute la deuxième électrode (2) sur la première électrode (1) ; et/ou
- dans lequel, pour déclencher l'état non transparent, on superpose une tension de transparence (VT) sous la forme d'une tension supplémentaire ou d'une composante de tension supplémentaire de la tension (V) à la tension de détection (VS) ; et/ou
- dans lequel, pour déclencher un état transparent du pixel (3), on fait varier le signal de détection dans une plage de tension comprise entre la valeur de la tension de seuil (VD, VD⁻) et une tension de base (0) ; et/ou
- dans lequel
-- on mesure une valeur d'une capacité (cp) d'au moins une des deux électrodes (1, 2) en tant que signal de détection par rapport à une tension de base (0), et
-- on applique une tension de transparence (VT) entre les électrodes (1, 2) supérieure à une valeur absolue de la valeur seuil (VD, VD⁻) pour la commutation du pixel (3) dans l'état transparent ou non transparent.
